Europäisches Patentamt

European Patent Office

Office européen des brevets

(19)

(11) Numéro de publication: **0 166 836**
**B1**

(12) **FASCICULE DE BREVET EUROPÉEN**

(45) Date de publication du fascicule du brevet:
12.07.89

(21) Numéro de dépôt: 84402555.1

(22) Date de dépôt: 11.12.84

(51) Int. Cl.⁴: **G 01 S 15/02,** G 01 N 29/00,
G 01 N 29/04

(54) Procédé de caractérisation de la structure d'un milieu, et dispositif mettant en oeuvre ce procédé.

(30) Priorité: 16.12.83 FR 8320198

(43) Date de publication de la demande:
08.01.86 Bulletin 86/2

(45) Mention de la délivrance du brevet:
12.07.89 Bulletin 89/28

(84) Etats contractants désignés:
AT BE DE FR GB IT NL SE

(56) Documents cité:
EP-A-0 042 601
EP-A-0 064 399
EP-A-0 092 841

IEEE TRANSACTIONS ON SONICS AND
ULTRASONICS, vol. SU-26, no. 5, septembre 1979,
pages 353-362, New York, US; R. KUC et al.:
"Estimating the acoustic attenuation coefficient
slope for liver from reflected ultrasound signals"
ALTA FREQUENZA, vol. 44, no. 8, août 1975, pages
462-468, Milano, IT; C. BRACCINI et al.: "Variance
properties in digital correlation techniques"
REVIEW SCIENTIFIC INSTRUMENTS, vol. 46, no. 3,
mars 1975, pages 269-277, New York, US; Z. KAM et
al.: "Simple schemes for measuring
autocorrelation functions"
JOURNAL OF PHYSICS E; SCIENTIFIC
INSTRUMENTS, vol. 8, no. 3, mars 1975, pages 206-

(73) Titulaire: CGR ULTRASONIC, 9, Chaussée de Paris,
F-77102 Villenoy- les- Meaux (FR)

(72) Inventeur: Lannuzel, Olivier, SCPI 173, Bd
Haussmann, F-75379 Paris Cedex 08 (FR)
Inventeur: Pradal, Thierry, SCPI 173, Bd
Haussmann, F-75379 Paris Cedex 08 (FR)

(74) Mandataire: Ballot, Paul Denis Jacques, Cabinet
Ballot- Schmit 84, avenue Kléber, F-75116 Paris
(FR)

(56) Documents cité: (suite)
206, Londres, GB; ICHIRO TAI et al.: "A real time
correlator with a peak detector"
ELEKTRONIK, vol. 26, no. 4, avril 1977, pages 95-100,
Munich, DE; A. MARGANITZ: "Mikrowellen-
Tachometer misst berührungslos.
Geschwindigkeitsmessung auch bei
Schwebefahrzeugen"

EP 0 166 836 B1

## Description

La présente invention concerne un procédé de caractérisation de la structure d'un milieu et un dispositif pour la mise en oeuvre de ce procédé. Elle trouve plus particulièrement son application dans le domaine médical pour la caractérisation des tissus du corps humain par des procédés d'investigation ultrasonores mais elle peut trouver une application pour toutes autres sortes de milieux. En effet la caractérisation des milieux dont il est fait état dans la présente invention met en évidence le fait que ces milieux sont capables d'absorber des ondes ultrasonores plus ou moins fortement en fonction de la fréquence de l'onde ultrasonore d'excitation. Le principe des mesures qui permettent alors l'élaboration du coefficient d'absorption d'un milieu consiste à émettre vers ce milieu un signal ultrasonore et à mesurer le signal ultrasonore rétrodiffusé par ce milieu ainsi excité et à en déduire le coefficient d'absorption en comparant le signal émis et le signal rétrodiffusé.

Une présentation de l'état de la technique est donnée dans l'article de MM. P.A. Narayana et J. Ophir dans la revue Ultrasonic Imaging 5, 17-21 de 1983. Il y est fait état du coefficient d'absorption $\alpha$ d'un milieu dont la grandeur s'exprime en dB par cm et par mégahertz (dB/cm/MHz). Ce coefficient $\alpha$ exprime que, par exemple, une onde ultrasonore émise à 10 MHz et ayant pénétré jusqu'à 5cms à l'intérieur du milieu (10cms aller retour) aura subi une atténuation de 100 $\alpha$ dB (100dB si $\alpha$ = 1) en ressortant du milieu. Comme l'article cité le rappelle le coefficient $\alpha$ est lié à la fréquence de l'onde excitatrice par une relation $\alpha (f) = \alpha_0 f^b$. Dans la pratique, b pour l'ensemble des milieux, pour les milieux biologiques en particulier, prend une valeur comprise entre 1 et 2.

Cet article montre également que si le spectre de Fourier du signal d'excitation est gaussien autour d'une fréquence moyenne $f_0$, alors, le spectre du signal rétrodiffusé est également gaussien mais centré autour d'une fréquence centrale $f_c$ qui dépend aussi de la distance séparant la surface du milieu par laquelle l'onde ultrasonore est entrée, de la zone de ce milieu qui a rétrodiffusé le signal. Compte tenu d'une vitesse de propagation relativement constante dans le milieu (1540 m/s pour les milieux chargés en eau) un signal rétrodiffusé par une zone du milieu réapparaît à la surface de ce milieu au bout d'une durée plus ou moins longue selon que cette zone se situe plus ou moins loin de cette surface.

Ainsi, si on considère deux zones d'un milieu, zone 1 et zone 2, une excitation ultrasonore de spectre gaussien rétrodiffusé par chacune de ces zones réapparaîtra à la surface du milieu à des instants différents $t_1$ et $t_2$. Ces signaux rétrodiffusés outre qu'ils apparaissent à des instants différents présentent des caractéristiques d'amplitude et de spectre de fréquence différentes. L'amplitude du signal rétrodiffusé par la zone la plus éloignée, par exemple la zone 2, est inférieure à l'amplitude du signal rétrodiffusé dans la zone la plus proche puisque cette onde a parcouru plus de chemin aller retour dans le milieu que la première. Pour une impulsion d'excitation donnée le signal reçu est donc décroissant avec le temps. Par ailleurs, les spectres de Fourier de ces deux signaux rétrodiffusés sont différents puisque, schématiquement le coefficient d'absorption dépendant de la fréquence, les fréquences hautes de chacun de leur spectre ont subi par rapport à leurs fréquences basses une atténuation d'autant plus forte qu'elle aura duré plus longtemps c'est-à-dire que le signal rétrodiffusé proviendra d'une zone plus éloignée de la surface. En dernier ressort ce que cet article confirme c'est que, malgré cette atténuation dépendante de la fréquence, les spectres des signaux rétrodiffusés sont également gaussiens le premier autour d'une fréquence centrale $f_1$ et le second autour d'une fréquence centrale $f_2$ avec $f_1$ supérieure à $f_2$. Si l'on appelle $\sigma$ l'écart type de la distribution gaussienne du spectre émis on peut alors exprimer que le coefficient d'absorption en un endroit du milieu situé entre les zones 1 et 2 aura pour valeur:

$$\alpha = \frac{f_2 - f_1}{2\sigma^2 (d_1 - d_2)}.$$

Dans cette expression $d_1$ et $d_2$ sont respectivement les abscisses, mesurées selon l'axe de propagation et de rétrodiffusion, des zones 1 et 2 par rapport à la surface du milieu par lequel entrent et ressortent les ondes ultrasonores. Autrement dit pour connaître $\alpha$ en un endroit donné du milieu il faut mesurer $f_1$ et $f_2$ à des abscisses $d_1$ et $d_2$ respectivement plus petites et plus grandes que l'abscisse de l'endroit en question. La sélection des signaux rétrodiffusés, RD1 (t) et RD2 (t), correspondant aux zones d'abscisses $d_1$ et $d_2$ peut être obtenue en ouvrant des fenêtres temporelles de réception à des dates respectivement $t_1$ et $t_2$ liées à ces abscisses et à la vitesse de propagation c par une relation équivalente à:

$$t_q = \frac{d_q}{c}.$$

Les signaux rétrodiffusés, RD1 (t) et RD2 (t), comportent alors dans leur spectre de Fourier les informations fréquence centrale $f_1$ et $f_2$ utiles. Pour plus de compréhension on peut se reporter avec profit aux développements mathématiques décrits dans l'article cité et notamment aux formules n° 11 et 17 desquelles on a tiré l'expression précédente de $\alpha$ en fonction de $f_2$ et $f_1$. On remarquera à ce propos que les décalages de fréquence $f_2 - f_0$, qui sont dans bien des cas de l'ordre de 250 KHz, entrent tout à fait, par rapport à une onde ultrasonore émise à 10 MHz, dans la condition supplémentaire de validité de la théorie qui veut que le décalage relatif par rapport à la fréquence moyenne d'émission soit inférieur à 20 % (250/10000 inférieur à 20 %).

Jusqu'à la présente invention il était connu de mesurer $f_1$ et $f_2$ en calculant tout le spectre RD1 (f) et RD2 (f), de chacun des signaux rétrodiffusés au moyen de matériels effectuant une transformée de Fourier rapide du signal (en anglais FFT). En fait ces matériels FFT effectuent une transformée de Fourier discrète du signal. C'est-à-dire que pour chaque signal rétrodiffusé, RD1 (t) ou RD2 (t), on démodule par deux oscillateurs en quadrature de phase le signal reçu, on filtre par un filtre passe bas chacun des deux signaux ainsi démodulés et on prélève des échantillons quantifiés au moyen d'échantillonneur bloqueur suivi de convertisseur analogique numérique au rythme d'une fréquence d'échantillonnage. Les matériels FFT collectent ainsi une pluralité d'échantillons successifs et délivrent après un temps de calcul un ensemble de grandeurs numériques représentatives des amplitudes de chacune des raies du spectre du signal étudié. On effectue alors sur ces amplitudes de raies des calculs de valeur moyenne et d'écart type de spectre.

Or ces matériels FFT présentent un premier inconvénient qui est lié à leur circuit de calcul. En effet, ceux-ci ne peuvent travailler que sur un nombre d'échantillons qui soit une puissance de 2: par exemple 64 ou 128 échantillons. Autant il est compréhensible que plus le nombre d'échantillons est grand plus la précision des résultats donnés par cette méthode est grande, autant il est non moins compréhensible que cette méthode entraîne des hypothèses sur la stationnarité du milieu étudié. Si ce milieu est mobile, il y a lieu de ne le considérer stationnaire que pendant un temps limité ce qui entraîne une limitation du nombre d'échantillons à prendre en compte pour une précision donnée de la mesure. Si compte tenu de la stationnarité le nombre d'échantillons optimum est par exemple de l'ordre de 90, on constate que la mesure au moyen de matériels FFT présente des inconvénients puisque 90 n'est pas une puissance de 2.

Par ailleurs le signal rétrodiffusé étant bruité, les résultats donnés par la méthode FFT sont entachés d'erreur de mesures. Enfin, ces matériels FFT nécessitent de mettre en oeuvre beaucoup de fonctions électroniques et d'effectuer un grand nombre d'opérations. De plus la nécessité d'acquérir tous les échantillons préalablement à tout calcul va à l'encontre d'applications en temps réel où l'on explore au fur et à mesure tous les endroits d'un milieu et où l'on désire connaître le coefficient d'absorption des différents endroits au fur et à mesure ou ils sont explorés. Ces applications en temps réel sont particulièrement recherchées quand on désire dresser une cartographie par des moyens d'imagerie, par exemple sur un moniteur de télévision, du coefficient $\alpha$.

L'invention a pour objet de remédier aux inconvénients cités en posant le problème différemment. En effet, l'utilisateur n'est pas intéressé par tout le spectre de chacun des signaux rétrodiffusés mais uniquement par leur moyenne et par leur écart type. Aussi, plutôt que de calculer les amplitudes de chacune des raies du spectre et d'effectuer ensuite sur cette distribution d'amplitude des calculs de moment permettant d'évaluer la fréquence moyenne et l'écart type, elle propose une méthode qui tout en étant moins riche dans la connaissance du phénomène, calcule directement et uniquement les résultats qui intéressent l'utilisateur. L'invention part des considérations suivantes qu'il y a une relation étroite entre la densité spectrale RD (f) d'un signal RD (t) et la fonction d'autocorrélation R ($\tau$) de ce signal RD (t), et que les moments d'ordres $\underline{n}$ de RD (f) sont égaux aux dérivés d'ordres $\underline{n}$ de la fonction d'autocorrélation calculée à $\tau = 0$. Ceci peut s'écrire sous la forme d'une expression générale des moments:

$$\frac{1}{(j2\pi)^n} \cdot \frac{d^n R(\tau)}{d\tau^n}_{\grave{a}\tau=0} = m_n = \int f^n \cdot RD\,(f).df$$

L'invention concerne donc un procédé de caractérisation de la structure d'un milieu selon la revendication 1.

L'invention concerne également un dispositif de caractérisation de la structure d'un milieu selon la revendication 8.

L'invention sera mieux comprise à la lecture de la description qui suit et à l'examen des figures qui l'accompagnent. Celles-ci ne sont pas limitatives ni du procédé ni du dispositif de l'invention. Sur ces figures les mêmes repères désignent les mêmes éléments. Elles représentent:

- figure 1, un dispositif conforme à l'invention;
- figure 2, un exemple particulier de réalisation du dispositif de l'invention;
- figure 3, des diagrammes temporels des signaux intervenant dans le procédé de l'invention;
- figure 4, un diagramme des spectres des signaux rétrodiffusés par différents endroits du milieu.
- figure 5 et 6, deux circuits permettant la mise en oeuvre d'une variante de l'invention.

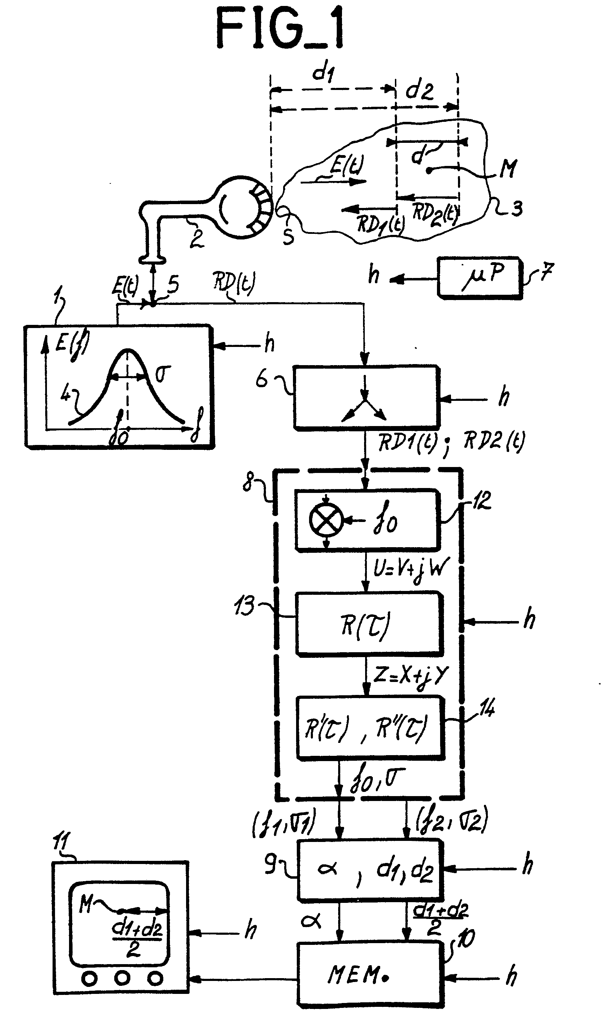

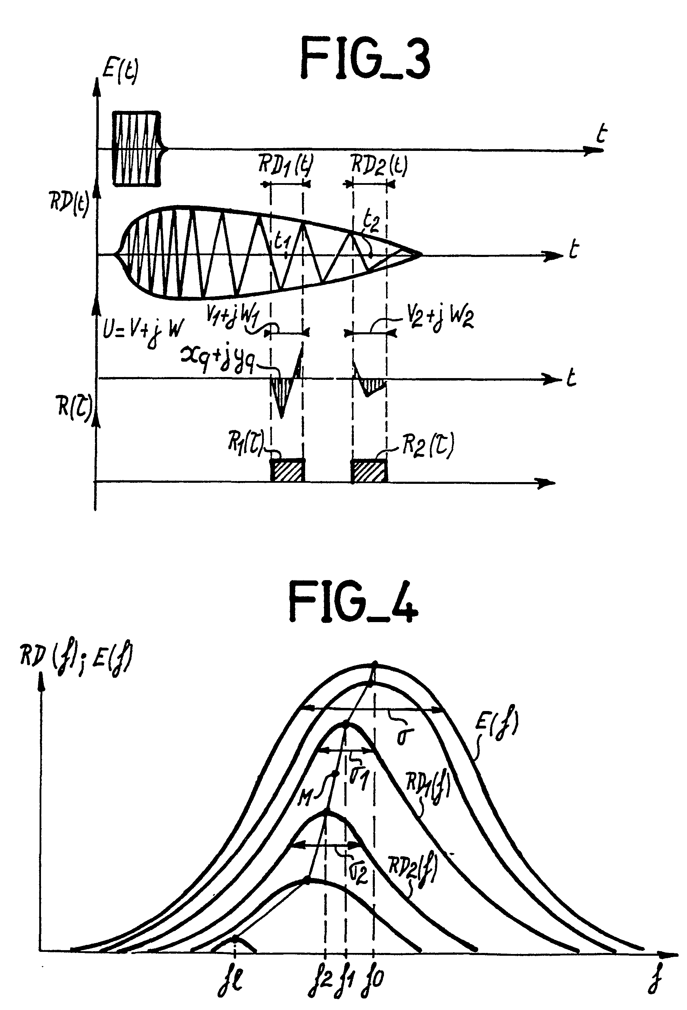

La figure 1 représente un dispositif conforme à l'invention. Il comporte un générateur 1 qui émet après filtrage dû à une sonde 2 un signal ultrasonore E (t) dans un milieu 3. Le spectre E (f) de E (t) a la forme d'une courbe de Gauss 4 centrée autour d'une fréquence centrale $f_0$ et d'écart type $\sigma$, sensiblement équivalent à la bande à 3dB de ce spectre puisqu'il est gaussien. Le signal E (t) émis à la surface S du milieu 3 se propage dans ce milieu et il est rétrodiffusé en signaux respectivement RD1 (t) et RD2 (t) par une première et une deuxième zone situées respectivement autour des abscisses $d_1$ et $d_2$ sur l'axe de propagation à partir de la surface S. Le signal E (t) est relativement bref, dans un exemple il dure environ 6,4 microsecondes. Une fois le signal E (t) émis, la sonde 2, d'un type piézoélectrique travaillant successivement en émission puis en réception, est disponible pour recevoir le signal rétrodiffusé total RD (t). Au moyen d'un duplexeur 5, ou de tout autre moyen analogue, le signal rétrodiffusé reçu est dirigé sur des moyens de sélection 6 pour filtrer temporellement les signaux RD1 (t) et RD2 (t) correspondant aux première et deuxième zones. Les moyens de sélection peuvent comporter tout simplement une porte analogique pilotée par un séquenceur 7 délivrant un signal d'horloge $\underline{h}$ et permettant ainsi de ne laisser passer que les signaux RD1 (t) et RD2 (t) compris dans le signal retrodiffusé total RD (t). Ces signaux E (t) et RD (t) apparaissent sur la figure 3 qui mentionne symboliquement pour ce dernier que premièrement son amplitude s'atténue avec le temps et que d'autre part

3

sa composition spectrale évolue vers les fréquences basses également avec le temps.

Les deux signaux rétrodiffusés, RD1 (t) et RD2 (t) sont introduits à l'entrée de moyens d'analyse spectrale 8 qui délivrent en sortie les fréquences centrales et les écarts type, respectivement $f_1$ et $\sigma_1$ et $f_2$ et $\sigma_2$, de chacun de ces signaux. Des moyens 9 de calcul appliquent la formule du calcul de $\alpha$. Cette valeur de $\alpha$ ainsi que son abscisse $(d_1 + d_2)/2$ peuvent être enregistrées dans une mémoire 10 qui peut notamment servir de mémoire d'image pour visualiser, sur un moniteur de télévision 11, un point M situé à une abscisse correspondante et dont la luminosité est plus ou moins forte selon que $\alpha$ est plus ou moins grand.

Ce qui caractérise l'invention c'est que les moyens 8 d'analyse spectrale comportent des moyens 12 pour effectuer une démodulation, en quadrature de phase et par la fréquence moyenne $f_0$, de chacun des deux signaux rétrodiffusés, des moyens 13 pour calculer la fonction d'autocorrélation $R(\tau)$ du signal produit par les moyens 12 et des moyens 14 pour calculer les dérivés du premier ordre $R'(\tau)$ et du second ordre $R''(\tau)$ de ces fonctions d'autocorrélation. Elles sont représentatives comme on l'explique plus loin, des fréquences centrales $f_1$ ou $f_2$ et des écarts type $\sigma 1$ ou $\sigma 2$ des deux signaux rétrodiffusés.

Connaissant un signal RD (t), (RD1) (t) ou RD2 (t), la fonction d'autocorrélation $R(\tau)$ de ce signal RD (t) peut s'écrire:

$$R(\tau) = \int RD(t) \cdot RD^*(t-\tau) \cdot dt = A(\tau) \cdot e^{j\phi(\tau)}$$

puisque $R(\tau)$ est un signal complexe. Si RD (t) est un signal échantillonné on peut définir une fonction d'autocorrélation discrète par la formule suivante:

$$r(\tau) = \sum_P z_p \cdot z_{p-1}^* = X + jY = Z$$

Dans cette formule P est le nombre total d'échantillons pris en compte pour le calcul de $r(\tau)$, et $\underline{p}$ est l'indice temporel d'un échantillon, p - 1 étant l'échantillon qui est apparu immédiatement avant l'échantillon $\underline{p}$. Par ailleurs, $z_p$ peut s'écrire:

$z_p = x_p + jy_p$,

expression dans laquelle j est le nombre complexe tel que $j^2 = -1$ et où $x_p$ et $y_p$ sont les amplitudes des échantillons $z_p$ du signal RD (t) une fois qu'il a été démodulé par deux oscillateurs en quadrature puis filtré et quantifié. L'ensemble des échantillons $z_p$ forme un signal $U = V + jW$, où V est l'ensemble des parties réelles: $x_1 \, x_2....x_p$, et W l'ensemble des parties imaginaires: $y_1, \, y_2,....y_p$ de ces échantillons. Le signal U, contenant tous les échantillons $z_p$ est dit signal complexe échantillonné. Dans l'explication qui suit on explique des traitements effectués sur un signal RD (t), sachant que dans la réalité c'est chacun des signaux RD1 (t) et RD2 (t), qui sont parties du signal RD (t), qui subiront à leur tour les traitements evoqués.

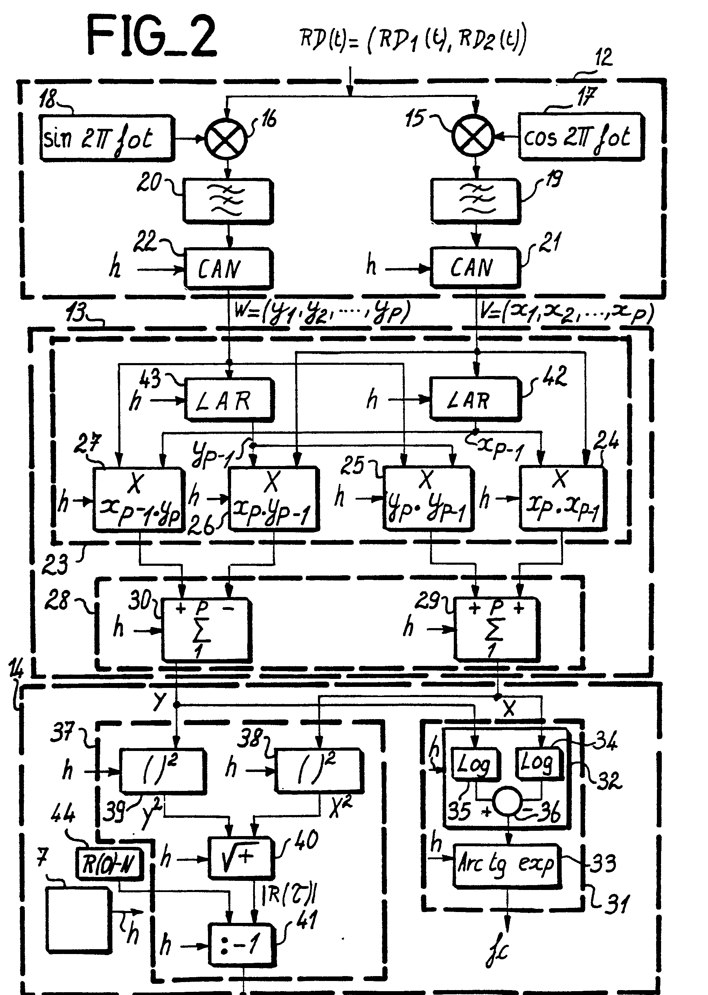

Sur la figure 2 le signal RD (t) est introduit simultanément sur une première entrée de deux démodulateurs 15 et 16 recevant respectivement sur leur deuxième entrée des signaux en quadrature, $\cos(2\pi f_0 t)$ et $\sin(2\pi f_0 t)$, délivrés par deux oscillateurs en quadrature 17 et 18. Ces deux démodulateurs effectuent une transposition du spectre RD (f) de RD (t) d'une grandeur égale à $f_0$. Ils effectuent une démodulation dite en quadrature car les signaux qui les attaquent sur leur deuxième entrée sont en quadrature de phase l'un par rapport à l'autre. En faisant passer chacun des signaux démodulés à travers un filtre passe-bas, respectivement 19 et 20, et en les échantillonnant dans des échantillonneurs respectivement 21 et 22 comprenant chacun un échantillonneur-bloqueur suivi d'un convertisseur analogique-numérique (CAN), on obtient un ensemble de grandeurs complexes dont les parties réelles $x_p$ sont délivrées par l'échantillonneur 21 et dont les parties imaginaires $y_p$ sont délivrées par l'échantillonneur 22. Le signal complexe échantilloné U peut s'écrire symboliquement $U = V + jW$ sachant que V est l'ensemble des valeurs $x_1, \, x_2...x_p$ et W l'ensemble des valeurs $y_1, \, y_2....y_p$. Le dispositif de la figure 2 comporte encore un circuit 13 pour calculer la fonction d'autocorrélation du signal RD (t) et un circuit 14 pour calculer les dérivés d'ordres 1 et 2 de cette fonction d'autocorrélation. Comme le signal échantillonné U est complexe, la fonction d'autocorrélation discrète $r(\tau)$ est complexe, et sa partie réelle est X, sa partie imaginaire étant Y.

Il ressort du procédé de l'invention que les inconvénients cités sont supprimés. En particulier, l'incidence du bruit est moindre car c'est une des propriétés d'une fonction d'autocorrélation d'un signal que de s'affranchir d'un bruit blanc. En effet, le bruit blanc n'étant pas corrélé sur lui-même sa fonction d'autocorrélation n'est différente de zéro que si $\tau$ est nul; pour toute autre valeur de $\tau$ les variations désordonnées du signal de bruit font que la fonction d'autocorrélation de ce bruit est nulle. Or, le calcul des moments d'ordre $\underline{n}$, donné par l'expression générale des moments vue plus haut, peut être approximé à $\tau$ égal à la période d'échantillonnage donc à $\tau$ différent de O. On montrera que cette approximation qui est favorable du point de vue du bruit se justifie. De plus, pour améliorer la précision il est possible de prendre un nombre d'échantillons optimum eu égard aux conditions de stationnarité du phénomène étudié et à la précision que l'on désire obtenir. Ceci n'est pas possible avec la méthode FFT. Enfin, si les concepts mathématiques qu'il faut manier pour calculer la fréquence moyenne et l'écart type sont ardus, les matériels à mettre en oeuvre qui résultent de ces calculs sont simples et entraînent une réduction significative des opérations de multiplication nécessaires pour arriver au résultat. En effet, dans le procédé de l'invention, comme dans celui de l'état de la technique utilisant des matériels FFT le traitement des signaux peut se faire sous forme numérique, et l'on peut montrer que pour un nombre P d'échantillons pris dans chacun des deux procédés le nombre d'opérations de multiplications nécessaires dans la méthode de l'invention est inférieur dans un rapport $\text{Log}_2$ P de celui qui est nécessaire dans le procédé FFT ($\text{Log}_2$ P désigne le logarithme à base 2 de P).

Pour calculer le moment d'ordre I de la transformée de Fourier RD (f) correspondant à la fréquence centrale de ce spectre on peut écrire en application de l'expression générale des moments:

$$m_1 = \int f \cdot RD(f) \cdot df = \frac{1}{j2\pi} \cdot \frac{d\,R(\tau)}{d\tau}\bigg|_{\tau=0} = \frac{R(\tau) - R(0)}{j2\pi\,\tau}$$

L'approximation de la dérivée première de R ($\tau$) telle que représentée en fin de cette expression est juste car elle repose sur une propriété de la fonction d'autocorrélation à savoir que R (- $\tau$) égale R ($\tau$) conjugué. Dans ce cas $\tau$ est la période d'échantillonnage et correspond donc à l'inverse de la fréquence d'échantillonnage. Or, R ($\tau$) peut s'écrire:

$$R(\tau) = A(\tau)\,e^{j\Phi(\tau)}$$

expression dans laquelle A ($\tau$) est une fonction réelle symétrique et dans laquelle $\Phi$ ($\tau$) est une fonction réelle antisymétrique. Il en résulte que l'on peut écrire :

$$\frac{dA(\tau)}{d\tau} = 0 \text{ à } \tau = 0$$

ce qui entraîne tout calcul fait:
$$m_1 = \frac{A(\tau)}{2\pi} \cdot \frac{d\Phi(\tau)}{d\tau} \cdot e^{j\Phi(\tau)} \text{ à } \tau = 0$$

On peut exprimer:

$\frac{d\Phi(\tau)}{d\tau}$ sous la forme $\frac{d\Phi(\tau)}{d\tau} = \frac{\Phi(\tau) - \Phi(0)}{\tau} = \frac{\Phi(\tau)}{\tau}$

puisque $\Phi$ (0) est nul sachant que $\Phi$ ($\tau$) est une fonction réelle antisymétrique.
Pour la même raison, on a:

$$m_0 = R(0) = A(0)\,e^0 = A(0).$$

En remarquant que $\Phi$ ($\tau$) est l'argument de R ($\tau$), on peut alors écrire:

$$m_1 = \frac{m_0}{2\pi\tau} \cdot \text{Arg}(R(\tau)) = \frac{m_0}{2\pi\tau} \cdot \text{Arg}(r(\tau))$$

On peut encore écrire cette expression en exprimant r ($\tau$) sous sa forme dépendant des échantillons ($x_p$, $y_p$). On obtient donc une expression finale du moment d'ordre 1 de RD (f):

$$m_1 = \frac{m_0}{2\pi\tau} \cdot \text{Arc tg} \frac{\sum\limits_{P} (y_p \cdot x_{p-1} - y_{p-1} \cdot x_p)}{\sum\limits_{P} (x_p \cdot x_{p-1} + y_p \cdot y_{p-1})} = \frac{m_0}{2\pi\tau} \cdot \text{Arc tg} \frac{Y}{X}$$

Puisque la tangente de l'argument d'un nombre complexe est égal au rapport de sa partie imaginaire à sa partie réelle. On voit en conséquence que pour le calcul de

$\frac{m_1}{m_0}$,

qui nous intéresse pour des raisons de normalisation, il suffit alors de calculer les parties réelles et imaginaires, X et Y, de la fonction d'autocorrélation discrète r ($\tau$).

Le circuit 13 de la figure 2 comporte des moyens de retard 23 pour connaître, à chaque échantillon reçu, les grandeurs $x_p$ et $y_p$ du signal complexe échantillonné correspondant à l'échantillon de rang p et pour connaître les mêmes éléments de l'échantillon immédiatement précédent c'est-à-dire de rang p - 1. Pour ce faire les moyens de retard 23 comportent deux lignes à retard respectivement 42 et 43 reliées en cascade aux sorties des échantillonneurs 21 et 22. Ces lignes à retard 42 et 43 ne délivrent à leurs sorties l'information qu'elles reçoivent à un instant t qu'au bout d'un temps t + τ, où τ correspond à la période d'échantillonnage précitée. Dans la pratique ces lignes à retard peuvent être constituées de registres à décalage, recevant sur leurs entrées en parallèle les informations binaires du signal quantifié délivré par les échantillonneurs, et restituant ces informations sur leurs sorties en parallèle sous l'effet d'une impulsion d'horloge h élaborée par le séquenceur 7. Ce séquenceur 7 est initialisé par l'émission des impulsions acoustiques E (t).

Les moyens de retard 23 comportent en outre un jeu de multiplicateurs 24 à 27 recevant sur leurs entrées les parties réelles x, ou imaginaires, y, du signal complexe échantillonné, correspondant à un échantillon donné et à un échantillon précédent, pour effectuer, au rythme imposé par le séquenceur 7 respectivement les multiplications suivantes:

$$x_p \cdot x_{p-1}, y_p \cdot y_{p-1}, x_p \cdot y_{p-1}, x_{p-1} \cdot y_p.$$

Le circuit 13 de calcul de la fonction d'autocorrélation comporte, en cascade avec les moyens de retard 23, des moyens sommateurs 28 comportant deux sommateurs-accumulateurs 29 et 30 reliés respectivement par leurs entrées aux sorties des multiplicateurs 24, 25 et 26, 27. Ces sommateurs-accumulateurs effectuent pour un nombre P d'échantillons le calcul des valeurs réelles X et imaginaires Y de la fonction d'autocorrélation r (τ). Le nombre P d'additions successives effectuées par chacun des sommateurs-accumulateurs 29 ou 30 peut être choisi comme on le désire c'est-à-dire sans contrainte d'une proportionnalité quelconque à 2.

Les moyens 31 de calcul de la dérivée d'ordre 1 de la fonction d'autocorrélation, contenus dans les moyens 14, comportent un diviseur 32 effectuant la division de la partie imaginaire Y de la fonction d'autocorrélation par la partie réelle X de cette même fonction, conformément à l'application de l'expression finale du moment d'ordre 1. En cascade avec le diviseur 32 se trouve une table d'arc-tangente 33 recevant en adresse sur ses entrées la valeur de la tangente d'un angle recherché et délivrant en sortie la valeur de cet angle. Pour des raisons de simplification le diviseur 32 est un diviseur logarithmique c'est-à-dire qu'il est composé de deux tables de logarithme, les tables 34 et 35 recevant en adresse respectivement les grandeurs X et Y. Ces tables délivrent en sortie les valeurs Log X et Log Y respectivement. Un soustracteur 36, recevant les valeurs produites par ces tables élabore un résultat (Log Y - Log X) qui est équivalent à Log Y/X. Dans ces conditions la table 33 du calcul de l'arc tangente (Y/X) est remplacé par une table arc-tangente-exponentiel de Log Y/X. Dans la pratique tous les calculs effectués par les circuits numérotés 23 à 36 peuvent être effectués par un microprocesseur. Dans ce cas la table 33 est une mémoire morte préprogrammée capable de répondre à la transformation trigonométrique arc-tangente-exponentiel.

L'expression générale des moments d'ordre n de la transformée de Fourier RD (f) du signal RD (t) permet d'écrire:

$$\frac{d^2 R(\tau)}{d\tau^2}_{\tilde{a}\tau = 0} = -4\pi^2 \int f^2 \cdot RD(f) \cdot e^{j2\pi f\tau} \, df \quad _{\grave{a}\tau = 0}.$$

En remplaçant dans le premier membre de cette égalité R (τ) par son expression en fonction de son module A (τ) et de son argument Φ (τ), en ayant notamment développé A (τ) sous la forme d'un développement limité, et en ayant normalisé l'écart type pour le rendre indépendant de l'énergie du signal RD (t) on peut écrire une fois tous calculs faits:

$$\sigma^2 = -\frac{1}{2\pi^2\tau^2} \cdot \left(\frac{A(\tau)}{A(0)} - 1\right) = -\frac{1}{2\pi^2\tau^2}\left(\frac{|R(\tau)|}{R(O)} - 1\right)$$

Expression dans laquelle τ est la période d'échantillonnage égale à l'inverse de la fréquence d'échantillonnage et dans laquelle A (τ) est le module de R (τ) tandis que A (0) est égal à R (0). Une fois rendu à cette étape il convient de remarquer que R (0) est en fait le module de la fonction d'autocorrélation du signal pour τ = 0 en considérant qu'il n'y a pas de bruit, c'est à dire son énergie. Comme en fait le signal RD (t) est bruité il convient de remplacer R (0) par R (0) - N : N étant l'énergie du bruit dans la fenêtre d'analyse. Dans ces conditions l'expression finale de l'ecart type sera équivalente à:

$$\sigma^2 = -\frac{1}{2\pi^2\tau^2}\left(\frac{|R(\tau)|}{R(O) - N} - 1\right)$$

Les moyens 37 de calcul du moment d'ordre 2 de la transformée de Fourier RD (f) effectuent tout simplement cette dernière opération. S'agissant d'un signal échantillonné il convient de remplacer R (τ) par r (τ) Or, par les moyens 13 de calcul de la fonction d'autocorrélation vue précédemment on dispose de la partie réelle X et de la partie imaginaire Y de cette dernière fonction. Le module d'un tel signal complexe est égal à la racine carrée de la somme des carrés des parties réelles et imaginaires. Aussi on introduit chacun des signaux X ou Y sur les deux entrées d'un multiplicateur délivrant en sortie une grandeur représentant le carré de la grandeur admise en entrée. Les multiplicateurs 38 et 39 reçoivent respectivement sur leurs entrées les signaux X et Y. Un circuit 40 recevant sur ses entrées les sorties des multiplicateurs 38 et 39 effectue l'opération correspondant à la racine carrée de la somme des signaux introduits à ses entrées. Ce faisant la sortie du circuit 40 délivre une grandeur égale au module de r (τ).

Un circuit 41 recevant sur une de ses entrées la sortie du circuit 40 et sur une autre entrée une grandeur numérique proportionnelle à (R (0) - N) effectue le rapport de ces deux grandeurs et leur retranche la quantité 1. L'obtention de (R (0) - N) ne présente pas de difficulté: R (0) est l'énergie moyenne du signal reçu c'est-à-dire le signal utile en présence de bruit. Cette énergie peut être mesurée par tous moyens classiques. Notamment, pour rendre cette mesure homogène avec celle du module de la fonction d'autocorrélation, on calcule R (0) d'une manière similaire à R (τ). Après démodulation en quadrature et échantillonnage, on introduit les échantillons complexes de ce signal sur deux multiplicateurs qui élèvent au carré la grandeur admise en entrée. Il n'y a donc pas de ligne de retard ici: τ est nul. Puis on effectue une sommation accumulation des produits élevés au carré. On extrait la racine carré de cette sommation accumulation qui est égale à:

$$R\ (O) = \sqrt{\sqrt{\sum_{1}^{P}(x_{p})^{2} + \sum_{1}^{P}(y_{p})^{2}}}$$

N est l'énergie du bruit que l'on mesure avec des moyens identiques aux précédents, mais pendant une absence du signal utile c'est-à-dire en dehors de toute émission acoustique. La soustraction (R (0)-N) ne présente pas non plus de difficulté. L'ensemble de ces moyens est noté 44. Le circuit 41 délivre donc un signal représentatif de l'écart type du spectre RD (f) de RD (t).

Dans une réalisation préférée, toutes les opérations effectuées par les opérateurs 37 à 44 sous l'action du séquenceur 7 sont faites par un microprocesseur programmé à cet effet. Ce microprocesseur peut être le même que celui qui était utilisé pour le calcul de la fréquence moyenne. En particulier on constate que les circuits 38 et 39 effectuent des multiplications comme les multiplicateurs 24 à 27 et qu'ils correspondent donc dans le microprocesseur qui serait utilisé à un même type d'opérations. Dans ce cas ce microprocesseur est aussi utile pour garder en mémoire les résultats $f_{1}$, $\sigma_{1}$ en attendant que parviennent les résultats $f_{2}$, $\sigma_{2}$ pour permettre aux moyens 9 du calcul de $\alpha$ de connaître les mesures utiles. Le procédé et le dispositif qui viennent d'être décrits permettent donc de résoudre efficacement le problème posé.

Dans un exemple, l'écart type $\sigma$ de E (t) est de l'ordre de 2 MHz autour d'une fréquence $f_{0}$ = 10 MHz. La durée d'analyse des signaux rétrodiffusés, RD1 (t) et RD2 (t), y est égale à 6,4 microsecondes. Il n'y a pas à priori de relation entre la durée de la fenêtre d'analyse et la durée du signal émis. La durée d'analyse est déterminée par le nombre d'échantillons nécessaires pour l'évaluation de la corrélation. La durée du signal émis est égale environ à l'inverse de la bande spectrale du signal. Après démodulation en quadrature, les spectres des signaux rétrodiffusés sont ramenés autour de 0Hz. C'est-à-dire que la bande passante utile de ces signaux est égale à l'écart type et est donc de l'ordre de 2 MHz. Si l'on appelle $f_{e}$ la fréquence d'échantillonnage on choisit d'une manière préférée $f_{e}$ telle que $f_{e}$ soit supérieure à cinq fois $\sigma$. Dans l'exemple évoqué on a choisi $f_{e}$ égal à 10 MHz. Ceci signifie que la durée de quantification de chaque échantillon $z_{p}$ est de l'ordre de 100 nanosecondes. En conséquence dans chacun des signaux RD1 (t) et RD2 (t) on peut prendre 64 échantillons d'où P = 64. Les sommateurs-accumulateurs 29 ou 30 doivent donc être capables de fonctionner au rythme de la fréquence d'échantillonnage. Ils sont par exemple des TDC 1008 ou 1009 ou 1010 de la société TRW (Etats-Unis). Dans cet exemple ces circuits intégrés comportent chacun quatre opérateurs. Chaque opérateur effectue d'une part la multiplication des opérandes introduits à ses entrées et d'autre part l'accumulation des résultats de ses multiplications. Autrement dit chaque opérateur remplit la fonction d'un multiplicateur (24 à 27) des moyens de retard et la partie accumulation de la fonction des sommateurs-accumulateurs (29 ou 30). Pour la partie sommation, qui pour le sommateur accumulateur 29 est en fait une soustraction, on introduit les sorties de deux opérateurs correspondant d'un tel circuit intégré sur un additionneur, ou soustracteur. De tels multiplicateurs-accumulateurs délivrent respectivement des résultats codés sur 8 bits, 12 bits ou 16 bits. Compte tenu de la durée de la fenêtre d'analyse, 6,4 microsecondes, et de la vitesse $\underline{c}$ de propagation de l'onde ultrasonore, 1540 m/s, il en résulte une imprécision de détermination des abscisses $d_{1}$ et $d_{2}$ de l'ordre de 4,8 mm. En effet, 64 microsecondes X 1500 m par seconde/2 (à cause de l'aller et du retour) = 4,8 mm.

On voit apparaître ici l'intérêt de la méthode de l'invention. Si 4,8 mm est une longueur de pas trop importante pour définir avec suffisamment de précision le milieu étudié, on peut choisir de prendre un pas plus faible par exemple 3,75 mm ce qui correspond à 50 échantillons. La méthode par FFT ne permettrait que de choisir 4,8 mm ou 2,4 mm correspondant à 64 échantillons ou 32 échantillons respectivement, 64 et 32 étant des puissances de 2. Le calcul de $\sigma_{1}$ et de $\sigma_{2}$ en première approximation n'est pas nécessaire. On peut se contenter de la valeur $\sigma$ de E (t). Cependant pour plus de précision il est préférable de remplacer $\sigma^{2}$ par le produit $\sigma_{1} \cdot \sigma_{2}$, ou par $\sigma_{1}^{2}$ ou $\sigma_{2}^{2}$.

La figure 3 montre symboliquement les signaux U complexes échantillonnés munis de leurs ensembles d'échantillons $x_q + jy_q$. Il y a bien deux ensembles d'échantillons correspondant respectivement aux signaux RD1 (t) et RD2 (t). Les fonctions d'autocorrélation correspondantes R1 ($\tau$) et R2 ($\tau$) apparaissent également sur le diagramme de la figure 3. Sur la figure 4 sont représentés les spectres des signaux E (f) et RD (f). Cette représentation schématique indique que les amplitudes des spectres vont décroissant quand le signal qu'elles concernent provient d'une zone de plus en plus éloignée de la surface du milieu. D'autre part la fréquence-centrale qui est la fréquence moyenne de la distribution gaussienne de chacun de ces spectres se déplace également vers les fréquences basses avec l'éloignement des zones explorées. Typiquement l'écart qui separe la fréquence moyenne $f_o$ du spectre E (f) d'une fréquence centrale limite, $f_l$ concernant une zone limite d'exploration au-delà laquelle les résultats ne sont plus significatifs, est de l'ordre de 250 KHz: $f_o - f_l = 250$ KHz. Le coefficient d'absorption ultrasonore en un point M situé entre les zones 1 et 2 et qui est égal à la tendance en ce point de la variation de la fréquence centrale du signal rétrodiffusé reçu est indiqué ici comme étant approximé par interpolation entre les valeurs des fréquences centrales $f_1$ et $f_2$ de part et d'autre de ce point M.

Telle que l'invention vient d'être décrite, à chaque émission d'une impulsion E (t) il est possible de calculer le coefficient d'absorption au moins en un point M. Pour tracer une cartographie des coefficients d'absorption en tous les points du milieu on peut alors pratiquer un balayage en agissant sur le séquenceur 7 de telle manière à déplacer périodiquement, d'une impulsion de E (t) à l'autre, les zones 1 et 2 entre lesquelles on désire connaître la valeur de ce coefficient d'absorption. Pour cette raison le signal E (t) n'est plus un signal impulsionnel comprenant une seule impulsion mais est un signal répétitif dont la période dans un exemple vaut par exemple 40 microsecondes. La différence de durée entre cette période de répétitivité et la durée de l'impulsion de E (t) permet de recevoir un certain nombre de signaux rétrodiffusés tels que RD1 (t) ou RD2 (t). Dans l'exemple décrit où E (t) dure 6,4 microsecondes on peut ainsi recevoir jusqu'à 5 signaux tels que RD1 (t): puisque 5 x 6,4 microsecondes est inférieur à 40 microsecondes - 6,4 microsecondes.

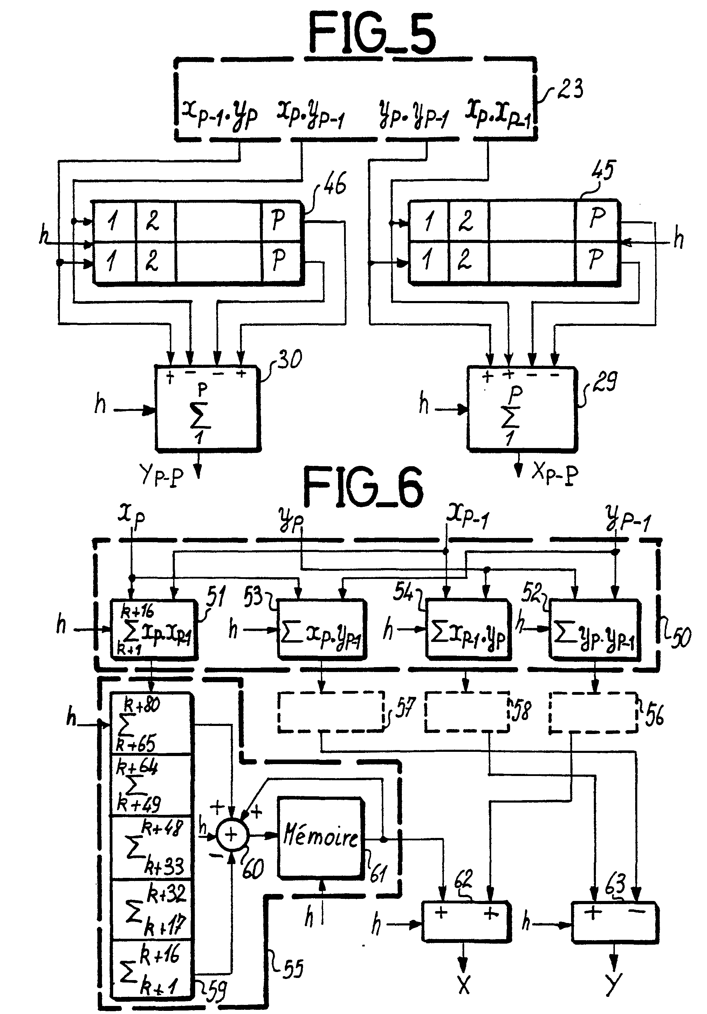

Mais la méthode de l'invention permet de dépasser cette limite de 5 signaux en proposant un recouvrement des signaux RD1 (t) sur les signaux RD2 (t) et donc des zones $d_1$ et $d_2$. Pour ce faire, dans la figure 5, on remplace les sommateurs-accumulateurs 29 et 30 de la figure 2 par un jeu de deux registres à décalage, 45 et 46, suivi de ces sommateurs-accumulateurs. Dans ce cas ces registres à décalage contiennent 2 P cases (P correspond au nombre d'échantillons optimum). Ces registres reçoivent les produits élaborés par les multiplicateurs 24 et 25 d'une part et 26 et 27 d'autre part. A chaque impulsion du séquenceur 7 un couple de produits réels ($y_p . y_{p-1}$ et $x_p . x_{p-1}$) et un couple de produits imaginaires ($x_{p-1} . y_p$ et $x_p . y_{p-1}$) sont introduits respectivement dans ces registres à decalage, tandis qu'un couple de produits réels et de produits imaginaires correspondant mais de rang antérieur (de rang p-P; $y_{p-P} . y_{p-1-P}$, $x_{p-P} . x_{p-1-P}$; et $x_{p-1-P} . y_{p-P}$, $x_{p-P} . y_{p-1-P}$) sont extraits de ces registres. Les sommateurs-accumulateurs additionnent alors les produits introduits en même temps qu'ils soustraient les produits extraits. La finesse théorique de la différenciation d'une zone 1 par rapport à une zone 2 est alors augmentée dans un rapport égal à P puisqu'à chaque échantillon reçu on peut définir une zone qui correspond au P derniers produits connus. Dans ce cas la démodulation et la quantification sont permanentes et la sélection des signaux est réduite à sa plus simple expression: c'est-à-dire que les résultats $f_c$ et $\sigma$ sont connus au fur et à mesure de l'arrivée des échantillons (toutes les 100 nanosecondes).

Cependant l'information contenue dans un échantillon n'est pas complètement indépendante de l'information contenue dans un échantillon adjacent. Pour que la fréquence centrale $f_1$ soit significativement différente de la fréquence centrale $f_2$ il convient de se tenir au-delà de cet écart temporel de 1 échantillon. Dans ce cas on peut procéder différemment. On dédouble les sommateurs-accumulateurs 29 et 30 en un certain nombre de sommateurs-accumulateurs. Ce nombre dépend du nombre de fréquences centrales quel'on veut élaborer pendant la période de répétitivité du signal E (t) émis. Par exemple si on considère que 16 échantillons doivent séparer deux mesures successives, c'est-à-dire une mesure prenant en compte les échantillons n° 1 à n° 64, une mesure prenant en compte les échantillons n° 17 à 80, etc..., il convient de multiplier par 4 le nombre des sommateurs 29 et 30. Dans un exemple un ensemble de portes conditionne le libre passage des produits élaborés par les multiplicateurs vers ces sommateurs-accumulateurs. Ces portes sont commandées par le séquenceur 7 en fonction des lots d'échantillons concernés.

Dans la figure 6 on retient les mêmes hypothèses que dans la figure 5, mais on y montre un circuit intégré multiplicateur-accumulateur tel que ceux précités. Un tel circuit 50 reçoit en même temps l'échantillon $z_p$ et l'échantillon $z_{p-1}$ retardé par les lignes à retard. L'accumulation qu'il effectue est limitée au nombre des échantillons qui séparent le départ de deux mesures successives de $f_1$ et $f_2$. Dans un exemple elle est limitée à P/4 échantillons: soit 64/4 = 16 échantillons. Ainsi, à partir d'un échantillon de rang k donné, chacun des multiplicateurs- accumulateurs 51 à 54 du circuit 50 délivre une accumulation, sur un lot de 16 échantillons, des produits réels $x_{p-1} . x_p$ et $y_{p-1} . y_p$ et et des produits imaginaires $x_p . y_{p-1}$ et $x_{p-1} . y_p$. Chacune de ces accumulations de produits réels ou imaginaires est introduite, à la fin du traitement de chaque lot, dans un circuit d'addition à décalage respectivement 55 à 58. Les circuits 55 à 58 sont identiques. Le circuit 55, qui est le seul détaillé, comporte un registre 59 à décalage à 5 cases (64/16 + 1) piloté par le séquenceur 7, un additionneur 60 à trois entrées, et une memoire 61. Chaque case du registre 59 contient le résultat de l'accumulation d'un des cinq derniers lots successifs d'échantillons. L'additionneur 60 et la mémoire 61 constituent un accumulateur de type classique. Mais comme cet accumulateur de type classique travaille avec le registre 59, à la fin du traitement de chaque lot d'échantillons son contenu est relatif au P (64) derniers échantillons connus. En effet, cet accumulateur de type classique additionne recursivement, au fur et à mesure de leurs arrivées, les accumulations délivrées par le multiplicateur-accumulateur 51. De plus, il retranche l'accumulation relative au lot dont le rang est antérieur de cinq rangs au rang du dernier lot qui arrive. Il contient donc en permanence la somme des accumulations des quatre derniers lots arrivés. Deux sommateurs 62 et 63 reliés respectivement aux circuits 55 et 56 et aux circuits 57 et 58 délivrent les parties réelles X et imaginaires Y de la fonction d'autocorrélation discrète.

En définitive, tout ce passe ici comme dans le circuit de la figure 2. Mais au lieu de prendre un nombre optimum P d'échantillons, on prend des lots réduits: ici des sous-multiples de P. Au moyen des registres à décalage, 45 et 46 figure 5, ou au moyen des additionneurs à décalage 55 à 57 figure 6, on recombine ces lots pour avoir une mesure dépendante du nombre optimum P des derniers échantillons connus. Les fenêtres d'analyse des mesures de $f_1$ et $f_2$ se recouvrent partiellement. La différence de recouvrement des fenêtres d'analyse correspond à un lot d'échantillons. Ainsi, de lot en lot, on peut définir des fenêtres d'analyse successives et entrelacées et donc les mesures de $f_1$ et $f_2$ correspondent à des zones proches $(d_1, d_2)$ l'une de l'autre.

## Revendications

1. Procédé de caractérisation de la structure d'un milieu (3) au cours duquel on effectue successivement les opérations suivantes:

- on émet (1, 2) vers le milieu un signal impulsionnel acoustique dont le spectre (4) de fréquence est gaussien autour d'une fréquence moyenne $(f_o)$;
- on reçoit à un instant donné $(t_1)$ un premier signal acoustique rétrodiffusé (RD1 (t)) par une première zone $(d_1)$ du milieu et à un instant ultérieur $(t_2)$ un deuxième signal acoustique rétrodiffusé (RD2 (t)) par une deuxième zone $(d_2)$ du milieu;
- on effectue (8) l'analyse spectrale des deux signaux rétrodiffusés pour obtenir la fréquence centrale $(f_c)$ du spectre de Fourier de chacun de ces signaux rétrodiffusés ladite analyse spectrale comportant une étape de démodulation en quadrature de phase des deux signaux rétrodiffusés;
- on calcule (9) le coefficient d'absorption acoustique $(\alpha)$ du milieu entre les deux zones à partir d'une part des fréquences centrales obtenues pour chacune de ces zones et à partir d'autre part de la distance séparant ces zones;
caractérisé en ce que ladite analyse spectrale consiste
- à effectuer la dite démodulation (12) en quadrature de phase par ladite fréquence moyenne;
- à calculer (13) les fonctions d'autocorrélation de chacun des signaux démodulés,
- et à calculer (14) les dérivés du premier ordre de ces fonctions d'autocorrélation représentatives desdites fréquences centrales.

2. Procédé selon la revendication 1 caractérisé en ce que dans l'analyse spectrale:
- on démodule (15, 16) à leur tour chacun des signaux reçus, par deux (17, 18) oscillateurs oscillant en quadrature de phase et à ladite fréquence moyenne, pour obtenir respectivement un premier et un second couple de signaux démodulés;
- on filtre (19, 20) les signaux démodulés de chaque couple et on les échantillonne (21, 22) à une fréquence d'échantillonnage $(f_e)$ pour produire un premier $(V_1, W_1)$ et un deuxième $(V_2, W_2)$ ensemble de grandeurs complexes qui sont les parties réelles et imaginaires respectivement d'un premier $(U_1)$ et d'un deuxième $(U_2)$ signal complexe échantillonné et représentatif respectivement du premier et du deuxième signal acoustique rétrodiffusé;
- on calcule pour un nombre (P) d'échantillons et pour chaque signal complexe échantillonné, la fonction d'autocorrélation discrète $(r(\tau))$ de ce signal complexe échantilloné;
- on calcule les dérivés du premier et du deuxième ordre de cette fonction d'autocorrélation discrète pour obtenir la fréquence centrale et l'écart type du spectre de Fourier et de chacun des signaux acoustiques rétrodiffusés.

3. Procédé selon la revendication 2 caractérisé en ce que l'on calcule les dérivés d'ordres 1 et 2 de la fonction d'autocorrélation pour un nombre P d'échantillons correspondant à un optimum de précision de la mesure.

4. Procédé selon l'une quelconque des revendications 2 à 3 caractérisé en ce que pour le calcul des fréquences centrales et pour le calcul des écarts type on calcule séparément la partie réelle (X) et la partie imaginaire (Y) des fonctions d'autocorrélation discrètes.

5. Procédé selon la revendication 4 caractérisé en ce que l'on reçoit (7) avec un recouvrement partiel dans le temps le premier et le deuxième signal rétrodiffusé, en ce que l'on calcule (50) partiellement des parties réelles (X) et imaginaires (Y) de la fonction d'autocorrélation correspondant à des lots réduits d'échantillons (k + 1, k + 16), et en ce que l'on recombine (55-63) les résultats de ces calculs partiels entre eux pour que le calcul de la fonction d'autocorrélation porte sur un nombre optimum (P) d'échantillons supérieur à celui contenu dans les lots, les lots étant tels que le premier et le dernier correspondent à des échantillons respectivement du seul premier ou du seul deuxième signal rétrodiffusé.

6. Procédé selon l'une quelconque des revendications 2 à 5 caractérisé en ce que pour le calcul de la fréquence centrale on calcule (33) l'argument de la fonction d'autocorrélation du signal complexe échantillonné.

7. Procédé selon l'une quelconque des revendications 1 à 6 caractérisé en ce que l'on émet périodiquement le signal impulsionnel acoustique vers le milieu et en ce que à chaque impulsion on explore d'autres zones du milieu pour calculer le coefficient d'absorption acoustique en un autre endroit de ce milieu et pour dresser (10, 11) ainsi une cartographie du milieu étudié.

8. Dispositif de caractérisation de la structure d'un milieu (3) comportant
- des moyens (1, 2) d'émission vers le milieu d'un signal impulsionnel acoustique dont le spectre de fréquence est gaussien (4) autour d'une fréquence moyenne ($f_o$),
- des moyens (2, 5) de réception du signal acoustique quand il est rétrodiffusé par le milieu,
- des moyens (6) de sélection dans ce signal acoustique rétrodiffusé d'un premier (RD1 (t)) et d'un deuxième (RD2 (t)) signal rétrodiffusé correspondant à une première ($d_1$) et à une deuxième ($d_2$) zone du milieu,
- des moyens (8) d'analyse spectrale pour obtenir les fréquences centrales ($f_c$) des spectres de Fourier de chacun de ces deux signaux rétrodiffusés, lesdits moyens d'analyse spectrale comportant des moyens (12) de démodulation en quadrature de phase des deux signaux rétrodiffusés;
- et des moyens (9) de calcul de coefficient d'absorption acoustique du milieu entre les deux zones à partir d'une part des fréquences centrales obtenues et à partir d'autre part de la distance séparant ces zones, caractérisé ce que
- les moyens (12) de démodulation sont agencés pour effectuer ladite démodulation en quadrature de phase par ladite fréquence moyenne,
- et en ce que lesdits moyens d'analyse spectrale comportent en outre des moyens (13) pour calculer les fonctions d'autocorrélation de chacun des signaux démodulés, et des moyens (14) pour calculer les dérivés du premier ordre de ces fonctions d'autocorrélation représentatives desdites fréquences centrales.

9. Dispositif selon la revendication 8 caractérisé en ce que les moyens d'analyse spectrale comportent des moyens (15 - 18) pour démoduler en quadrature de phase les deux signaux rétrodiffusés cesdits moyens comportant deux oscillateurs (17 - 18) accordés à ladite fréquence moyenne pour obtenir respectivement un premier et un deuxième couple de signaux démodulés, des moyens (19 - 22) pour filtrer et échantillonner chacun des signaux démodulés et pour produire ainsi respectivement un premier ($V_1$, $W_1$) et un deuxième ($V_2$, $W_2$) ensemble de grandeurs complexes qui sont les parties réelles (V) et imaginaires (W) d'un premier ($U_1$) et d'un deuxième ($U_2$) signal complexe échantillonné, des moyens (23) de retards pour calculer le produit d'une grandeur complexe correspondant à un échantillon (p) par la même grandeur complexe correspondant à un échantillon immédiatement précédent (p-1), des moyens (28) sommateurs pour sommer des résultats délivrés par les moyens de retard et pour calculer ainsi les parties réelles (X) et imaginaires (Y) des fonctions d'autocorrélation discrète de chacun des deux signaux complexes échantillonés.

10. Dispositif selon la revendication 9 caractérisé en ce que les moyens pour calculer les dérivés d'ordres 1 des fonctions d'autocorrélation comportent des moyens (32) diviseurs pour effectuer les divisions des parties imaginaires de ces fonctions d'autocorrélation par leurs parties réelles et des moyens (33) de transformation trigonométriques reliées aux moyens diviseurs pour élaborer un signal représentatif des arguments de ces fonctions d'autocorrélation correspondant aux fréquences centrales des signaux rétrodiffusés.

11. Dispositif selon la revendication 10 caractérisé en ce que les moyens de sélection comportent des moyens (7) pour autoriser un recouvrement partiel dans le temps du premier et du deuxième signal rétrodiffusé, en ce que les moyens (13) de calcul de la fonction d'autocorrélation comportent des moyens (50) pour effectuer partiellement ce calcul correspondant à des lots réduits d'échantillons et des moyens (55 - 63) pour recombiner les résultats de ces calculs partiels, de telle façon que le calcul de la fonction d'autocorrélation porte sur un nombre optimum (P) d'échantillons supérieur à celui contenu dans les lots, ces lots étant tels que le premier et le dernier lot correspondent à des échantillons respectivement du seul premier ou du seul deuxième signal rétrodiffusé.

12. Dispositif selon l'une quelconque des revendications 8 à 9 caractérisé en ce que les moyens pour calculer les dérivés d'ordres 2 des fonctions d'autocorrélation comportent des moyens (38 - 40) pour élaborer des signaux représentatifs du module des fonctions d'autocorrélation, des moyens (44) pour mesurer les puissances des signaux reçus en présence de bruit et pour mesurer la puissance du bruit seul, et des moyens (41) de calcul algébrique pour produire un signal représentatif de l'écart type ($\sigma$) à partir des mesures de ces modules et de ces deux puissances.

13. Dispositif selon l'une quelconque des revendications 8 à 12 caractérisé en ce que les moyens de retard comportent deux lignes à retard (42 - 43) reliées aux moyens de quantification, quatre multiplicateurs (24 à 27) pour recevoir sur l'une de leurs deux entrées la partie réelle ou imaginaire d'une grandeur complexe relative à un échantillon et pour recevoir sur leur autre entrée la partie réelle ou complexe d'une grandeur complexe relative à un échantillon précédent et pour délivrer ainsi les différents termes des parties réelles ou imaginaires du produit de ces deux grandeurs complexes et en ce que les moyens sommateurs comportent des moyens (45, 46, 29, 30) pour délivrer des signaux représentatifs respectivement des sommes des P dernières parties réelles et imaginaires correspondant au P derniers produits connus de la fonction d'autocorrélation du signal rétrodiffusé (RD (t)).

14. Dispositif selon l'une quelconque des revendications 8 à 13 caractérisé en ce qu'il comporte des moyens (1) pour émettre périodiquement le signal impulsionnel acoustique, des moyens (7) pour modifier la sélection des signaux rétrodiffusé, et des moyens (10 - 11) pour dresser une cartographie des coefficients d'absorption des différents endroits du milieu.

## EP 0 166 836 B1

**Patentansprüche**

1. Verfahren zur Kennzeichnung der Struktur eines Mediums (3), während welchem die folgenden Schritte ausgeführt werden:

- Gegen das Medium wird ein akustisches Impulssignal ausgesendet (1 - 2), dessen Frequenzspektrum ein Gauß'sches Verhalten um eine Mittelfrequenz ($f_0$) aufweist;
- Ein erstes akustisches Signal, das von einer ersten Zone ($d_1$) des Mediums rückgestreut wird (RD1 (t)), wird zu einem bestimmten Zeitpunkt ($t_1$) empfangen, und ein zweites akustisches Signal, das von einer zweiten Zone ($d_2$) des Mediums rückgestreut (RD2 (t)) wird, wird zu einem späteren Zeitpunkt ($t_2$) empfangen:
- die Spektralanalyse dieser beiden rückgestreuten Signale wird ausgeführt, um die Zentralfrequenz (fc) des Fourierspektrums jedes dieser rückgestreuten Signale zu erhalten, wobei diese Spektralanalyse einen Schritt zur Demodulation der beiden rückgestreuten Signale in Phasenquadratur umfaßt;
- der Koeffizient der akustischen Absorption ($\alpha$) des Mediums zwischen beiden Zonen wird ausgehend einerseits von den Zentralfrequenzen, welche für jede dieser Zonen erhalten werden, und andererseits ausgehend von dem diese Zonen trennenden Abstand berechnet (9);
  dadurch gekennzeichnet, daß die Spektralanalyse darin besteht:
- die Demodulation (12) in Phasenquadratur mit der Mittelfrequenz vorzunehmen;
- die Autokorrelationsfunktionen jedes der demodulierten Signale zu berechnen (13);
- und die ersten Ableitungen dieser Autokorrelationsfunktionen zu berechnen (14), die für die Zentralfrequenzen repräsentativ sind.

2. Verfahren nach Anspruch 1, dadurch gekennzeichnet, daß in der Spektralanalyse:

- nacheinander jedes der empfangenen Signale durch zwei Oszillatoren (17, 18) demoduliert (15, 16) wird, die in Phasenquadratur und mit der Mittelfrequenz schwingen, um ein erstes Paar bzw. ein zweites Paar demodulierter Signale zu erhalten;
- die demodulierten Signale jedes Paares gefiltert werden (19, 20) sowie mit einer Abtastfrequenz ($f_e$) abgetastet werden, um eine erste ($V_1$, $W_1$) sowie eine zweite Menge ($V_2$, $W_2$) komplexer Größen zu erzeugen, welche die Realteile bwz. die Imaginärteile eines ersten ($U_1$) bzw. eines zweiten ($U_2$) komplexen abgetasteten Signals sind, das für das erste akustische rückgestreute Signal bzw. für das zweite akustische rückgestreute Signal repräsentativ ist;
- die diskrete Autokorrelationsfunktion (r ($\tau$) dieses komplexen abgetasteten Signals für eine Anzahl (P) von Abtastungen sowie für jedes komplexe abgetastete Signal berechnet wird;
- die erste und die zweite Ableitung dieser diskreten Autokorrelationsfunktion berechnet werden, um die Zentralfrequenz sowie die Standardabweichung des Fourierspektrums sowie jedes der akustischen rückgestreuten Signale zu erhalten.

3. Verfahren nach Anspruch 2, dadurch gekennzeichnet, daß die erste und die zweite Ableitung der Autokorrelationsfunktion für eine Anzahl P von Abtastungen berechnet werden, die einer bestmöglichen Meßgenauigkeit entsprechen.

4. Verfahren nach einem der Ansprüche 2 und 3, dadurch gekennzeichnet, daß für die Berechnung der Zentralfrequenzen sowie für die Berechnung der Standardabweichungen der Realteil (X) und der Imaginärteil (Y) der diskreten Autokorrelationsfunktionen getrennt berechnet werden.

5. Verfahren nach Anspruch 4, dadurch gekennzeichnet, daß das erste und das zweite rückgestreute Signal mit einer partiellen zeitlichen Überdeckung empfangen werden (7), daß die Realteile (X) und Imaginärteile (Y) der Autokorrelationsfunktion, die kleinen Mengen von Abtastungen (k + 1, k + 16) entsprechen, partiell berechnet werden und daß die Ergebnisse dieser partiellen Berechnungen rekombiniert (55 - 63) werden, damit die Berechnung der Autokorrelationsfunktion sich auf eine optimale Anzahl (P) von Abtastungen erstreckt, die größer als diejenige ist, welche in den Mengen enthalten ist, wobei die Mengen derart sind, daß die erste und die zweite Menge den Abtastungen allein des ersten bzw. allein des zweiten rückgestreuten Signals entsprechen.

6. Verfahren nach einem der Ansprüche 2 bis 5, dadurch gekennzeichnet, daß für die Berechnung der Zentralfrequenz das Argument der Autokorrelationsfunktion des abgetasteten komplexen Signals berechnet wird (33).

7. Verfahren nach einem der Ansprüche 1 bis 6, dadurch gekennzeichnet, daß das akustische Impulssignal gegen das Medium periodisch ausgesendet wird und daß bei jedem Impuls andere Zonen des Mediums abgetastet werden, um den Koeffizient der akustischen Absorption an einer anderen Stelle dieses Mediums zu berechnen und um auf diese Weise eine Kartographie des beobachteten Mediums anzulegen (10, 11).

8. Vorrichtung zur Kennzeichnung der Struktur eines Mediums (3), mit:

- Mitteln (1, 2) zur Aussendung eines akustischen Impulssignals gegen das Medium mit einem Frequenzsprektrum, das Gauß'sches Verhalten (4) um eine Mittelfrequenz ($f_o$) aufweist,
- Mitteln (2, 5) zum Empfangen des durch das Medium rückgestreuten akustischen Signals.
- Mitteln (6) zur Selektion eines ersten rückgestreuten Signals (RD1(t)) sowie eines zweiten rückgestreuten Signals (RD2(t)) in diesem rückgestreuten akustischen Signal, welche einer ersten ($d_1$) bzw. einer zweiten ($d_2$) Zone des Mediums entsprechen,

- Mitteln (8) zur Spektralanalysen um die Zentralfrequenzen ($f_c$) der Fourierspektren jedes dieser beiden rückgestreuten Signale zu erhalten, wobei diese Mittel zur Spektralanalyse Mittel (12) zur Demodulation der beiden rückgestreuten Signale in Phasenquadratur umfassen.

- und Mitteln (9) zur Berechnung des Koeffizienten der akustischen Absorption des Mediums zwischen den beiden Zonen ausgehend einerseits von den erhaltenen Zentralfrequenzen und andererseits ausgehend von dem diese Zonen trennenden Abstand,

dadurch gekennzeichnet, daß:

- die Mittel (12) zur Demodulation ausgebildet sind, um diese Demodulation in Phasenquadratur mit der Mittelfrequenz auszuführen,

- und daß diese Mittel zur Spektralanalyse Mittel (13) zur Berechnung der Autokorrelationsfunktionen jedes der demodulierten Signale sowie Mittel (14) umfassen, um die ersten Ableitungen dieser Autokorrelationsfunktionen, welche für diese Zentralfrequenzen repräsentativ sind, zu berechnen.

9. Vorrichtung nach Anspruch 8, dadurch gekennzeichnet, daß die Mittel zur Spektralanalyse umfassen: Mittel (15 - 18) für die Demodulation der beiden rückgestreuten Signale in Phasenquadratur umfassen, wobei diese Mittel zwei auf die Mittelfrequenz abgestimmte Oszillatoren (17 - 18) umfassen, um ein erstes bzw. ein zweites Paar demodulierter Signale zu erhalten; Mittel (19 - 22) zum Filtern und Abtasten jedes der demodulierten Signale, um auf diese Weise eine erste ($V_1$, $W_1$) bwz. eine zweite ($V_2$, $W_2$) Menge komplexer Größen zu erzeugen, die die Realteile (V) bzw. die Imaginärteile (W) eines ersten ($U_1$) bwz. eines zweiten ($U_2$) komplexen abgetasteten Signals sind: Verzögerungsmittel (23), um das Produkt einer komplexen Größe, die einer Abtastung (p) entspricht, mit derselben komplexen Größe, die einer unmittelbar vorausgehenden Abtastung (p-1) entspricht, zu berechnen; und Summiermittel (28) zum Summieren der durch die Verzögerungsmittel gelieferten Ergebnisse, um so die Realteile (X) und die Imaginärteile (Y) der Funktionen der diskreten Autokorrelation jedes der beiden komplexen abgetasteten Signale zu berechnen.

10. Vorrichtung nach Anspruch 9, dadurch gekennzeichnet, daß die Mittel zur Berechnung der ersten Ableitungen der Autokorrelationsfunktionen Teilermittel (32) umfassen, um die Division der Imaginärteile dieser Autokorrelationsfunktionen durch ihre Realteile auszuführen, sowie Mittel (33) zur trigonometrischen Umwandlung umfassen, welche mit den Teilermitteln verbunden sind, um ein Signal zu erzeugen, das für die Argumente dieser Autokorrelationsfunktionen, welche den Zentralfrequenzen der rückgestreuten Signale entsprechen, repräsentativ ist.

11. Vorrichtung nach Anspruch 10, dadurch gekennzeichnet, daß die Selektionsmittel Mittel (7) umfassen, um eine zeitliche partielle Überdeckung des erstens und des zweiten rückgestreuten Signals zu erlauben, daß die Mittel (13) zur Berechnung der Autokorrelationsfunktion Mittel (50) umfassen, um die kleinen Mengen von Abtastungen entsprechende Berechnung teilweise auszuführen, sowie Mittel (55 - 63) umfassen, um die Ergebnisse dieser partiellen Berechnungen zu rekombinieren, so daß die Berechnung der Autokorrelationsfunktion sich auf eine optimale Anzahl (P) von Abtastungen erstreckt, die größer als diejenige ist, die in den Mengen enthalten ist, wobei diese Mengen derart sind, daß die erste und die letzte Menge Abtastungen allein des ersten bzw. allein des zweiten rückgestreuten Signals entsprechen.

12. Vorrichtung nach einem der Ansprüche 8 bis 9, dadurch gekennzeichnet, daß die Mittel zur Berechnung der zweiten Ableitungen der Autokorrelationsfunktionen Mittel (38 - 40) umfassen, um Signale zu erzeugen, welche für den Betrag der Autokorrelationsfunktionen repräsentativ sind, Mittel (44), um die Leistung der bei Vorhandensein von Rauschen empfangenen Signale und die Leistung des Rauschens allein zu messen, sowie Mittel (41) zur algebraischen Berechnung umfassen, um ein Signal zu erzeugen, das für die Standardabweichung ($\sigma$) ausgehend von den Messungen dieser Beträge und dieser beiden Leistungen repräsentativ ist.

13. Vorrichtung nach einem der Ansprüche 8 bis 12, dadurch gekennzeichnet, daß die Verzögerungsmittel zwei Verzögerungsleitungen (42 - 43) umfassen, welche mit den Quantifizierungsmitteln verbunden sind, vier Multiplizierer (24 bis 27), um auf einem ihrer beiden Eingänge den Realteil oder den Imaginärteil einer komplexen Größe zu empfangen, die sich auf eine Abtastung bezieht, und um an ihrem anderen Eingang den realen oder komplexen Teil einer komplexen Größe, die sich auf eine vorausgehende Abtastung bezieht, zu empfangen und um auf diese Weise die verschiedenen Terme der Realteile oder der Imaginärteile des Produktes dieser beiden komplexen Größen zu liefern, und daß die Summiermittel Mittel (45, 46, 29, 30) umfassen, um Signale zu erzeugen, welche für die Summen der P letzten Realteile bzw. Imaginärteile repräsentativ sind, die den P letzten bekannten Produkten der Autokorrelationsfunktion des rückgestreuten Signals (RD(t)) entsprechen.

14. Vorrichtung nach einem der Ansprüche 8 bis 13, dadurch gekennzeichnet, daß sie Mittel (1) umfaßt, um das akustische Impulssignal periodisch auszusenden, Mittel (7) um die Selektion der rückgestreuten Signale zu verändern, sowie Mittel (10 - 11) umfaßt, um eine Kartographie der Koeffizienten der Absorption der verschiedenen Mediumsstellen anzulegen.

## Claims

1. A method for characterizing the structure of an environment (3) in the course of which the following operations are performed:

- an acoustic pulse signal is transmitted (1 and 2) into the environment, said signal having a frequency spectrum (4) with a gaussian distribution about a mean frequency $(f_0)$;
- at a given instant $(t_1)$ a first retrobroadcast acoustic signal (RD(t)) from a first zone $(d_1)$ of the environment is received and at a later instant $(t_2)$ a second retrobroadcast signal (RD2(t)) from a second zone $(d_2)$ is received;
- spectral analysis of the two retrobroadcast signals is performed (8) in order to obtain the center frequency $(f_c)$ of the fourier spectrum of each of these retrobroadcast signals, the said spectral analysis comprising a stage of demodulation with phase quadrature of the two retrobroadcast signals;
- the acoustic absorption coefficient (a) is calculated (9) for the environment between the zones on the basis on the one hand of the center frequencies obtained for each of these zones and on the basis on the other hand of the distance separating these zones;
characterized in that the said spectral analysis consists of:
- performing the said demodulation (12) with phase quadrature in respect of the said mean frequency;
- calculating (13) the functions of autocorrelation for each of the demodulated signals;
- and calculating (14) the first order derivatives of these autocorrelation functions representative of the said central functions.

2. The method as claimed in claim 1, characterized in that in the said spectral analysis:

- in turn each of the received signals is demodulated (15 and 16) using two oscillators (17 and 18) operating in phase quadrature and at the said mean frequency in order to respectively obtain a first and a second pair of demodulated signals;
- the demodulated signals of each pair are filtered (19 and 20) and they are sampled (21 and 22) at a sampling frequency $(f_e)$ in order to produce a first $(V_1$ and $W_1)$ and a second $(V_2$ and $W_2)$ set of complex magnitudes which are the real and imaginary parts respectively of a first $(U_1)$ and a second $(U_2)$ complex sampled signal and respectively representative of the first and of the second retrobroadcast signals,
- for a number (P) of samples and for each sampled complex signal the discrete autocorrelation function $(r(\tau))$ of this complex signal is calculated; and
- the first and second order derivatives of this discrete autocorrelation function are calculated in order to obtain the center frequency and the fourier spectrum type offset and of each of the acoustic retrobroadcast signals.

3. The method as claimed in claim 2, characterized in that the first and second order derivatives of the autocorrelation function are calculated for a number P of samples corresponding to an optimum accuracy of measurement.

4. The method as claimed in claim 2 or claim 3, characterized in that for the calculation of the center frequencies and for the calculation of the type offsets the real part (X) and the imaginary part (Y) of the discrete autocorrelation functions are calculated.

5. The method as claimed in claim 4, characterized in that with a partial overlap in time the first and the second retrobroadcast signals are received (7), in that the real parts (X) and the imaginary parts (Y) of the autocorrelation function are partially calculated (50) corresponding to the reduced fractions of samples (k + 1 and k + 16) and in that the results of these partial calculations are recombined (55 to 63) with each other in order to ensure that the calculation of the autocorrelation function is based on an optimum number (P) of samples in excess of that contained in the fractions, the fractions being such that the first and the last correspond to samples respectively of the single first retrobroadcast signal and of the single second retrobroadcast signal.

6. The method as claimed in any one of the claims 2 through 5, characterized in that for the calculation of the center frequency the argument of the autocorrelation of the complex sample signal is calculated (33).

7. The method as claimed in any one of the claims 1 through 6, characterized in that the pulse acoustic signal is periodically transmitted towards the environment and in that at each pulse other zones of the environment are explored in order to calculate the coefficient of acoustic absorption at another position of this environment and in order to thus construct (10 and 11) a map of the environment studied.

8. A device for characterizing the structure of an environment (3) comprising:

- means (1 and 2) for transmission into the environment of a pulse acoustic signal whose frequency spectrum is gaussian (4) around a mean frequency $(f_0)$,
- means (2 and 5) for the reception of the acoustic signal when it is retrobroadcast by the environment,
- means (6) for the selection from this acoustic retrobroadcast signal of a first retrobroadcast signal (RDI(t)) and of a second retrobroadcast signal (RD2(t)) corresponding to a first $(d_1)$ and a second $(d_2)$ zone of the environment,

- spectral analysis means (8) in order to obtain the center frequencies ($f_c$) of the fourier spectrums of each of these two retrobroadcast signals, the said spectral analysis means comprising means (12) for the phase quadrature demodulation of the two retrobroadcast signals, and

- means (9) for the calculation of the acoustic absorption of the environment between the two zones using on the one hand the center frequencies obtained and on the other hand the distance separating these zones, characterized in that

- the means (12) for demodulation are operated in order to perform the said phase quadrature demodulation in respect of the said mean frequency

- and in that these said spectral analysis means comprise furthermore means (13) to calculate the autocorrelation functions of each of the demodulated signals,

- and means (14) to calculate the first order derivatives of the autocorrelation functions representative of the said center frequencies.

9. The device as claimed in claim 8, characterized in that spectral analysis means comprise means (15 through 18) for phase quadrature demodulation of the two retrobroadcast signals, these said means comprising two oscillators (17 and 18) tuned to the said mean frequency in order to obtain respectively a first and a second pair of demodulated signals, means (19 through 22) in order to filter and sample each of the demodulated signals and to produce respectively a first ($V_1$ and $W_1$) and a second ($V_2$ and $W_2$) set of complex magnitudes which are the real (V) and imaginary (W) parts of a first ($U_1$) and a second ($U_2$) complex sampled signal, delaying means (23) in order to calculate the product of a complex magnitude corresponding to a sample (p) with a magnitude corresponding to an immediately preceding sample (p - 1), summating means (28) in order to summate the results supplied by the retarding means and in order to calculate thus the real (X) and imaginary (Y) parts of the discrete autocorrelation functions of each of the two complex sample signals.

10. The device as claimed in claim 9, characterized in that the means for calculating the first order derivatives of the autocorrelation functions comprise dividing means (32) in order to perform the divisions of the imaginary parts of these autocorrelation functions in respect of the real parts and trigonometric transforming means connected to the dividing means in order to process a signal representative of the arguments of these autocorrelation functions corresponding to the center frequencies of the retrobroadcast signals.

11. The device as claimed in claim 10, characterized in that the selection means comprise means (7) in order to authorize a partial overlap in time of the first and of the second retrobroadcast signal, in that the means (13) for the calculation of the autocorrelation function comprise means (50) in order to perform partially this calculation corresponding to reduced fractions of samples and means (55 through 63) in order to recombine the results of these partial calculations in such a manner that the calculation of the autocorrelation function has an optimum number (p) of samples greater than the number contained in the fractions, these fractions being such that the first and the last fraction correspond to samples respectively of the first or of the second retrobroadcast signal.

12. The device as claimed in claim 8 or claim 9, characterized in that the means to calculate the second order derivatives of the autocorrelation functions comprise means (38 through 40) in order to process signals representative of the module of the autocorrelation functions, means (44) in order to measure the power of the signals received in the presence of the noise and to measure the power of the noise as such, and means (41) for algebraic calculation in order to produce a signal representative of the offset ($\sigma$) starting from the measurements of these modules and of the two powers.

13. The device as claimed in any one of the claims 8 through 12, characterized in that the delay means comprise two delay means (42 and 43) connected to quantifying means, four multipliers (24 through 27) in order to receive, at one of their inputs, the real part or the imaginary part of a complex magnitude relating to a sample and to receive, on their other input, the real or complex part of a complex magnitude relating to a preceding sample and to thus supply the different terms of the real or imaginary parts of the product of the two complex magnitudes and in that the summating means comprise means (45, 46, 29 and 30) in order to supply signals representative respectively of the sums of the last real and imaginary parts of P corresponding to the last products of P known of the autocorrelation function of the retrobroadcast signal (RD(t)).

14. The device as claimed in any one of the claims 8 through 13, characterized in that it comprises means (1) in order to periodically transmit the pulse acoustic signal, means (7) to modify the selection of the retrobroadcast signals and means (10 and 11) in order to construct a map of the coefficients of absorption of the different parts of the environment.

# FIG_1

FIG_2

EP 0 166 836 B1

# FIG_3

# FIG_4

EP 0 166 836 B1

# FIG_5

$Y_{P-P}$

# FIG_6

X

Y

7